# EUROPEAN PATENT SPECIFICATION

(11) **EP 4 106 273 B1**
(45) Date of publication and mention of the grant of the patent: **29.04.2026**
(21) Application number: 21180423.2
(22) Date of filing: 18.06.2021
(51) Int. Cl.: H04L 41/16

(54) **APPARATUS, METHODS, AND COMPUTER PROGRAMS**
VORRICHTUNG, VERFAHREN UND COMPUTERPROGRAMME
APPAREIL, PROCÉDÉS ET PROGRAMMES INFORMATIQUES

(43) Date of publication of application: 21.12.2022
(73) Proprietor: Nokia Solutions and Networks Oy, 02610 Espoo (FI)
(72) Inventor: TANG, Haitao, 02620 Espoo (FI); MWANJE, Stephen, 84405 Dorfen (DE)
(74) Representative: Mudge, Kevin

(56) References cited:
- WO-A1-2021/028063
- US-A1- 2020 311 599
- US-A1- 2020 382 968
- US-A1- 2021 184 989

## Description

### Field

The present disclosure relates to apparatus, methods, and computer programs, and in particular but not exclusively to apparatus, methods and computer programs for network apparatuses.

### Background

A communication system can be seen as a facility that enables communication sessions between two or more entities such as user terminals, access nodes and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Content may be multicast or uni-cast to communication devices.

A user can access the communication system by means of an appropriate communication device or terminal. A communication device of a user is often referred to as user equipment (UE) or user device. The communication device may access a carrier provided by an access node and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known is the long-term evolution (LTE) or the Universal Mobile Telecommunications System (UMTS) radio-access technology. Another example communication system is so called 5G system that allows user equipment (UE) or user device to contact a 5G core via e.g. new radio (NR) access technology or via other access technology such as Untrusted access to 5GC or wireline access technology.

United States patent application publication number US 2020/311599 A1 relates to automatic object optimization to accelerate machine learning training. A request for a machine learning training dataset comprising a plurality of objects is received from a requestor. The plurality of objects includes data for training a machine learning model. A uniqueness characteristic for objects of the plurality of objects is determined, the uniqueness characteristic being indicative of how unique each object is relative to each other object. A group of objects from the plurality of objects is sent to the requestor, the group of objects being selected based at least partially on the uniqueness characteristic or sent in an order based at least partially on the uniqueness characteristic.

International patent application publication number WO 2021/028063 A1 relates to, in a communications network, obtaining data from a user plane function, UPF, related to traffic through the UPF. The data from the UPF is provided as input to a first machine learning model and a prediction of a congestion level in the user plane, UP, is received from the first machine learning model based on the data from the user plane function

### Summary

The present invention is defined by the appended independent claims. Certain more specific aspects are defined by the dependent claims.

### Brief description of Figures

Examples will now be described, by way of example only, with reference to the accompanying Figures in which:
Figure 1 shows a schematic representation of a 5G system;
Figure 2 shows a schematic representation of a network apparatus;
Figure 3 shows a schematic representation of a user equipment;
Figure 4 shows a schematic representation of a non-volatile memory medium storing instructions which when executed by a processor allow a processor to perform one or more of the steps of the methods of some examples;
Figure 5 shows a schematic representation of a network structure;
Figure 6 shows a schematic representation of a vendor application interacting with an operator apparatus;
Figures 7 and 8 illustrate example signalling between apparatus described herein; and
Figures 9 to 11 are flow charts illustrating potential operations that may be performed by apparatus described herein.

### Detailed description

In the following, certain aspects are explained with reference to mobile communication devices capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems with analogous components (for example, current 6G proposals). In the following, 3GPP refers to a group of organizations that develop and release different standardized communication protocols. 3GPP is currently developing and publishing documents related to Release 16, relating to 5G technology, with Release 17 currently being scheduled for 2022.

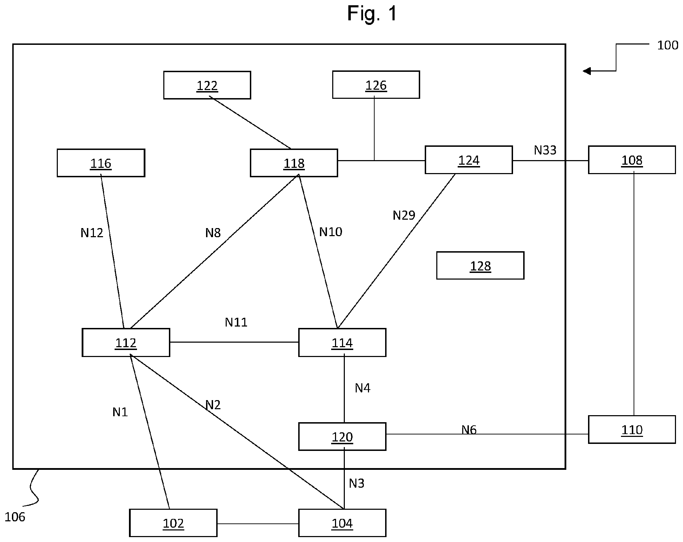

Before explaining in detail the exemplifying embodiments, certain general principles of a 5G wireless communication system are briefly explained with reference to Figure 1.

Figure 1 shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

The 5G RAN may comprise one or more gNodeB (gNB) distributed unit functions connected to one or more gNodeB (gNB) unit functions. The RAN may comprise one or more access nodes. It is understood that although the example network element is shown as a single apparatus, that the functions of the network element may be split amongst several distinct apparatuses.

The 5GC 106 may comprise one or more network functions, including one or more Access Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. Although the NRF 128 is not depicted with its interfaces, it is understood that this is for clarity reasons and that NRF 128 may have a plurality of interfaces with other network functions. It is understood that although the example network functions are respectively shown as a single apparatus, that the functions of each network function may be split amongst several distinct apparatuses.

The NRF performs multiple functions for the 5GC 106. For example, the NRF is configured to maintain a network function (NF) profile of available NF instances and their supported services, where an NF instance identifier represents an identifier identifying a particular NF/NF instance. The NF instance identifier is provided by the NF service consumer (i.e. a network function that is requesting a service from another entity, such as an NF service producer), and is globally unique inside the Public landline Mobile Network of the NRF in which the NF is registered. The NRF is also configured to allow other NF instances to subscribe to, and get notified about, the registration in NRF of new NF instances of a given type. The NRF is further configured to support service discovery functions by receiving NF Discovery Requests from NF instances, and provide information in respect of available NF instances fulfilling certain criteria (e.g., supporting a given service) in response to those NF Discovery Requests.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

**The** 5G standards introduced a new architectural concept into 3GPP communication networks called the Service Based Architecture (SBA). Using this architecture, Network Functions (NFs) can be virtualized and provide their services, using defined protocols and interfaces to other network functions or external parties' "verticals" (e.g. industrial application such as transport, media, and manufacturing). The interfaces are referred to as service-based interfaces (SBI), and may comprise REST API-based interfaces. The protocols for communication between the network elements may be, for example, the common HTTP/2 Internet protocol.

3GPP refers to a group of organizations that develop and release different standardized communication protocols. They are currently developing and publishing documents related to Release 16, relating to 5G technology, with Release 17 currently being scheduled for 2022.

To solve a given network machine learning-based use-case, a vendor often designs a machine learning-based application that needs to be trained with adequate data before the application can be used in any network, where the data is measured as being adequate from at least one of a quality and/or quantity perspective. However, the vendor usually has insufficient data for adequate training of the application. This leads to the likelihood of a sub-optimal machine learning-based solution to be deployed to an operator's network. The problem could be worse when keeping the initially trained vendor application for the service, as usually the network situation is time varying.

In contrast, the operator has data in the required volume, veracity, and variability for its network operation use cases, and this data is updated as the network conditions change. As the vender solution is deployed by the operator in the operator's network, the operator could allow the vendor application to access the operator data for training the machine learning-based application. This would allow the application to provide the service properly.

The following proposes to allow a vendor application to mine for and identify (from among the available operator data) the data and data features that needed for the application's training needs.

There are several issues that may crop up when enabling a vendor to access an operator's network data.

For example, as an operator would not usually allow a vendor application to have unlimited access to data for privacy reasons, the processing costs associated with data collection and management, etc., a mechanism by which an operator provides a vendor application with relevant data is considered.

In this example, the vendor application is configured with the parameters that it needs to learn to predict (e.g., predicting the value of a certain Key Performance Indicator (KPI) on a specific Managed Object Instance (MOI), which refers to at least one process and/or function performed by an entity being managed by the machine learning application). Thus the vendor application originally uses specific data attributes (e.g., performance measurements relating to, for example, radio link failure, counter a, b, and c, etc.) as the input for the prediction.

However, there may be many more data attributes available at the operator that are relevant to the prediction and could be used to improve the performance of prediction effectively. The availability of current values for these data attributes may even vary with the change of network configuration as well. As the vendor application does not know all these relevant data attributes available at the operator, the vendor application is unable to use them.

Therefore, it would be useful to provide a mechanism for enabling an operator to determine which data attributes that are relevant to the vendor application while the requesting vendor application may have zero (or limited) prior knowledge on the operator's network and data. Further, assuming the operator could provide any required data attributes, there needs to be provided a mechanism for enabling the vendor application to further select among the available the data attributes, for those attributes that are vitally needed according to the application's learning requirements.

The following aims to address at least one of the above-identified issues.

The following discloses a training model application (labelled herein as a TrAPP) for a vendor that requests from an operator data management function or service particular attributes/parameters for training a machine learning model. The vendor configures a data storage to provide values associated with the requested parameters (and may include parameters not explicitly requested if the operator believes them to be relevant). The TrAPP may then select a subset of these configured values to be provided to the TrAPP for training the model after evaluating what attributes/parameters may be made available to it. The data storage may then continue to provide only the selected subset of the configured values until the job is stopped.

The following discloses defines the mechanism for a vendor model training application to discover and request relevant data attributes from an operator data management function or service, to select the vital attributes necessary for its machine learning task, and to get the relevant data of the selected attributes, during the operation of the operator network. The mechanism does not need the vendor model training application to have any pre-knowledge on the operator's network and data, which can be changing during actual network operation. This process is illustrated in the following examples.

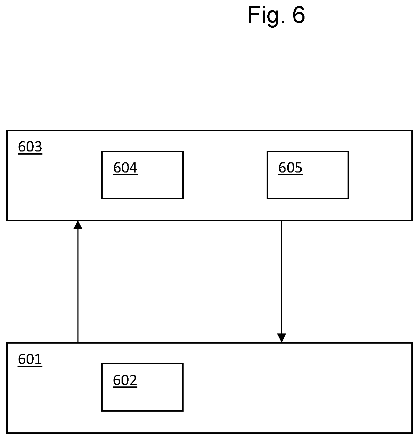

Figure 6 illustrates entities performing at least some of the operations described herein.

Figure 6 illustrates a vendor Model Training Application (TrAPP) 601 that comprises at least one machine learning model 602. The TrAPP is configured to train the at least one machine learning model 602 to learn the required prediction. The TrAPP 601 may be configured to deploy the machine learning model once trained.

The TrAPP 601 may signal a request for data for training the at least one machine learning model 602 to an operator Data Management Function (DaMaF) 603. The DaMaF 603 comprises a data storage management function 604 and at least one data storage 605. The data storage management function may be configured to provide data to the TrAPP 601, from the one or more data storage 605. Although the DaMaF 603 is shown as comprising the at least one data storage 605, it is understood that the DaMaF 603 may simply control access to the at least one data storage 605. The DaMaF may receive a request for data from the TrAPP 601, and respond to the request with relevant data.

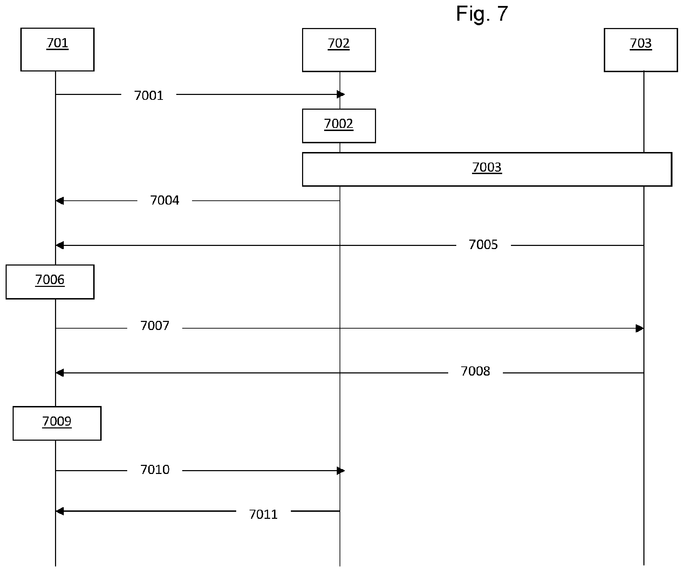

Figure 7 illustrates potential signalling that may be performed between the entities described above in relation to Figure 6.

Figure 7 illustrates potential signalling that may be performed between a TrAPP 701, a data storage management function 702, and a data storage 703.

At 7001, the TrAPP 701 sends a request to the Operator data storage management function 702 to create a job to mine and extract data attributes (including their values). These data attributes are also referred to as parameters in the following. This request may comprise an indication of at least on of a given target attribute, the target attribute's associated management object, the expected relation with the given target attribute, and the expected feature selection method(s) including the expected metrics and condition.

As the TrAPP may be configured to mine data for multiple scenarios, the TrAPP may utilize a Data Mining Profile for each such scenario, each Data Mining Profile describing the mining task to be accomplished. Potential attributes of the Data Mining Profile are given shown in Table 1.

| **Attribute label** | **Attribute label description** |
|---|---|
| Mining Profile ID | Unique identity value for an instance of this mining profile. |
| Target Attribute | Named parameter or vector of named parameters and optionally their values and context, which is given to find other relevant attribute(s) that has a Relation (as defined in the next entry) with this target attribute. Note: the named parameters are specified unambiguously as they could be defined in different standards / proprietary specifications. For example, the metadata may be used to specify it, no matter if the attribute is 3GPP standardized or not. |
| Relation | The relation between the said relevant attributes and the Target Attribute, for example, with the relation of ImpactingTo, ImpactedBy, or/and RepresentedBy (e.g., Target Attribute is the cluster center of the said relevant attributes), where the specific relations need to be standardized. |
| Target managed object instance (MOI) | The MOI or a set of MOls that associate to the Target Attribute, e.g., where the vendor's prediction application takes action (e.g., optimization, prediction, clustering, embedding, etc.) for the Target Attribute. |
| Feature Selection Method | The name of a well-known / standardized feature selection method. Note: the well-known feature selection names are, for example, Information Gain, Chi-square Test, Fisher's Score, Correlation Coefficient, Variance |
| | Threshold, Mean Absolute Difference, Dispersion ratio, etc., where the specific names need to be standardized or otherwise agreed between the operator and the vendor. |
| Metrics | The criteria (e.g., Correlation Coefficient value > 0.5) used to select features by the abovenamed feature selection method(s). |
| Condition | The OR/AND condition to select a feature, when two or more the abovenamed feature selection methods are used together, i.e., to select the feature when any or all of the criteria are met. |
| DataQuantity | An indication of the amount of data points to be provided, where each datapoint is a tuple that holds values for each of the included MOIs and attributes. The DataQuantity may have a default value which is applied if not value is specified and/or a maximum value which cannot be exceeded |
| Input Attribute | Named parameter or vector of named parameters that the TrAPP would use their values to train an machine learning model to make prediction(e.g., optimization, prediction, clustering, embedding, etc.). Note: the named parameters must be specified unambiguously as they could be defined in different standards / proprietary specifications. For example, the metadata of [4] is used to specify them, no matter if the attribute is 3GPP standardized or not. |
| Value | The value of the above Input Attribute (scalar or vector), Note: the values of the named parameters must be specified unambiguously as they could be defined in different standards / proprietary specifications. For example, the metadata of [4] can be used to specify them, no matter if the attribute is 3GPP standardized or not. |
| Input MOI | The MOI or a set of MOIs that associate to the Input Attribute, e.g., where the vendor's prediction application takes input from the Input Attribute or, takes action (e.g., optimization, prediction, clustering, embedding, etc.) for the Input Attribute. |
| Report Manner | The method to report all extracted data, e.g., in a file or as a stream, i.e., File / Streaming. |

The Data Mining Profile describes the desired/planned characteristics with which the TrAPP may request for mining of the data. To execute the mining, the TrAPP needs to set a specific job to get data, while the job may be deleted when the data has been delivered. However, the Data Mining Profile and its updates may be stored and held in the TrAPP for a longer time.

The request may also comprise an indication of a permission for the TrAPP to request this information. This indication of permission may be, for example, a license credential, authentication token, or the like.

At 7002, the data storage management function 702 determines if the request should be fulfilled i.e. if the request is a valid request. When the request comprises an indication of permission, as mentioned above, this permission indication may be used to determine whether the request should be fulfilled/is valid. If the request is determined to not be valid, the data storage management function sends an indication
*Table 1 Mining Profile for extracting machine learning relevant data attributes from a data storage or an online data producer* to the TrAPP 701 that the data request of 7001 will not be fulfilled (not shown). If the request is determined to be valid, the data storage management function 702 proceeds to 7003.

At 7003,the data storage management function 702 creates a job for data storage 703 to extract data related to the request of 7001. This job may be associated with a specific job identifier.

The task to extract data may be called a Data Mining Job and is instantiated by the TrAPP at the time of requesting for the data. This may be implemented via the provisional Management Services (MnS) createMOI procedure applied to a Data Mining Job information object class (IOC), whose attributes are described below. In particular, the data management function may use profile information provided by the TrAPP when requesting a job to create a job and to generate an identifier for the job after the job has been successfully created.

The Data Mining Job may inherit the basic attributes from the top IOC including the administrative and operational states. The Data Mining Job uses the Data Mining Profile to extract relevant data attributes from the data storage. This Data Mining Job may be comprised either by a Network Function, Managed Element or Sub Network and have the attributes in Table 2, with the corresponding attribute constraints in Table 3.

**Table 2: DataMiningJob IOC to create the job mining machine learning relevant data attributes.**

| Attribute name | Definition |
|---|---|
| dataMiningJobld | Unique identity value for the created data mining job. |
| administrativeState | Administrative state of the managed object instance describes the permission to use or prohibition against using the object instance. The administrative state is set by the Management services consumer. |
| | allowedValues: LOCKED, UNLOCKED. |
| operationalState | The Operational state of the managed object instance describes if an object instance is operable ("ENABLED") or inoperable ("DISABLED"). This state is set by the object instance or the MnS producer and is READ-ONLY. |
| | allowedValues: ENABLED, DISABLED. |
| controlParameterContainer | Container for additional control parameters |
| DataminingProfile | Meta data describing the mining type, as defined in Table 1 |
| DataQuantity | Amount of datapoints to be delivered. A data point represents a single; must have an upperlimit |

**Table 3: Attribute constraints of DataMiningJob IOC.**

| **Name** | **Definition** |
|---|---|
| controlParameterContainer Support Qualifier | Condition: Network management can directly control the operation of the Data Storage/Producer/consumer function, which could produce/consume the instance of the data object specified by a mining profile dataType instance (as defined in Table 1) |
| mining ProfileFormachine learning Support Qualifier | Condition: The Data Storage/Producer/consumer function could produce/ consume the instance of the data object specified by a mining profile dataType instance (as defined in Table 1) |
| DataQuantity Support Qualifier | Condition: The Data Storage/Producer/consumer function could produce/ consume the instance of the data object specified by a mining profile dataType instance (as defined in Table 1) |

At 7004, the data storage management function 702 responds to the signalling of 7001 to indicate to the TrAPP 701 that the job of 7003 has been created. This indication may comprise an identifier and/or address of the data storage 703 performing the job. For example, the indication may comprise a uniform resource identifier (URI) of the data storage 703. The indication may comprise the specific job identifier for the created job.

At 7005, the data storage 703 signals data from the created job to the TrAPP 701. This signalling may comprise the specific job identifier. This signalling may identify each of the parameters being provided in addition to proving at least one associated value for each parameter.

At 7006, the TrAPP 701 selects at least one of the provided parameters (and their associated values) for training the machine learning model. In other words, the vendor TrAPP 701 evaluates the received data and selects the data attributes from the extracted data that provide the desired information for training without requiring unnecessary data collection

At 7007, the TrAPP 701 signals the data storage 703. This signalling indicates which of the received parameters the TrAPP 701 has evaluated as being the most useful for training the machine learning model. In other words, this signalling indicates a subset of the parameters received in 7005, with the subset being a fraction (less than one) of the parameters received in 7005. The signalling of 7007 may request that the data storage collect and provide new data of only the further selected data parameters (including their values) for the specific job identifier. The request may include an indication of the amount of data points to be provided, where each datapoint is a tuple that holds values for each of the selected parameters.

At 7008, the data storage 703 signals new data to the TrAPP 701. This new data comprises values for the selected parameters that were signalled at 7007. This data may not comprise values for parameters that were not indicated as being selected at 7007.

At 7009, the TrAPP 701 selects a machine learning model from its library and trains it to produce the new machine learning model instance for the vendor's prediction application using the data provided in 7008. The selection of the machine learning model may be performed using any of a plurality of different selection mechanisms. Factors that may be considered when choosing the model include, for example, the maturity of the training, the type and/or quantity of data available, the area to be served, etc. Any appropriate selection mechanism may be implemented.

At 7010, assuming that the TrAPP 701 has received sufficient data for training the selected model, the TrAPP 701 signals, the data storage management function 702 to request that the job associated with the specific job identifier be stopped. After sufficient data received for the training. Where a license credential exists, this may be provided as part of the request of 7010.

At 7011, the data storage management function 702 responds to the signalling of 7010 to indicate that the job has been stopped. This response may comprise the specific job identifier.

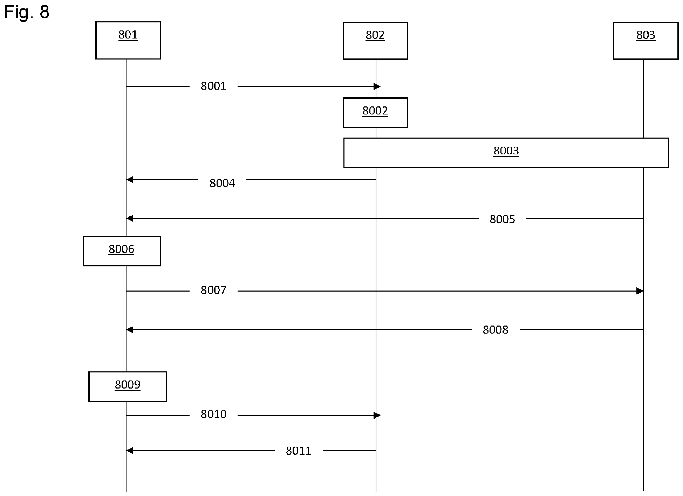

For a specific example of how the example of Figure 7 may be implemented, the 3GPP SA5 provisioning management services and file or stream reporting mechanisms are considered in Figure 8.

Figure 8 illustrates potential signalling that may be performed between the entities described above in relation to Figure 6.

Figure 8 illustrates potential signalling that may be performed between a TrAPP 801, a data storage management function 802, and a data storage 803.

At 8001, the TrAPP 801 sends a request to the Operator data storage management function 802 to create a job to mine and extract data attributes (including their values). These data attributes are also referred to as parameters in the following. This request may comprise an indication of at least one of a given target attribute, the target attribute's associated management object, the expected relation with the given target attribute, and the expected feature selection method(s) including the expected metrics and condition. This signalling may be, for example, a "ProvMnS,createMOI" signalling.

As the TrAPP may be configured to mine data for multiple scenarios, the TrAPP may utilize a Data Mining Profile for each such scenario, each Data Mining Profile describing the mining task to be accomplished. Potential attributes of the Data Mining Profile are given shown in Table 1.

The Data Mining Profile describes the desired/planned characteristics with which the TrAPP may request for mining of the data. To execute the mining, the TrAPP needs to set a specific job to get data, while the job may be deleted when the data has been delivered. However, the Data Mining Profile and its updates may be stored and held in the TrAPP for a longer time.

The task to extract data may be called a Data Mining Job and is instantiated by the TrAPP at the time of requesting for the data. This may be implemented via the provisional MnS createMOI procedure for a Data Mining Job IOC, whose attributes are described below.

The Data Mining Job may inherit the basic attributes from the top IOC including the administrative and operational states. The Data Mining Job uses the Data Mining Profile to extract relevant data attributes from the data storage. This Data Mining Job may be comprised either by a Network Function, Managed Element or Sub Network and have the attributes in Table 2, with the corresponding attribute constraints in Table 3.

Therefore, the request may comprise the parameters of the above-mentioned data mining job in Table 2.

The request may also comprise an indication of a permission for the TrAPP to request this information. This indication of permission may be, for example, a license credential, authentication token, or the like.

At 8002, the data storage management function 802 determines if the request should be fulfilled i.e. if the request is a valid request. When the request comprises an indication of permission, as mentioned above, this permission indication may be used to determine whether the request should be fulfilled/is valid. If the request is determined to not be valid, the data storage management function sends an indication to the TrAPP 801 that the data request of 8001 will not be fulfilled (not shown). If the request is determined to be valid, the data storage management function 802 proceeds to 8003.

At 8003, the data storage management function 802 creates a job for data storage 803 to extract data related to the request of 8001. This job may be associated with a specific job identifier.

At 8004, the data storage management function 802 responds to the signalling of 8001 to indicate to the TrAPP 801 that the job of 8003 has been created. This indication may comprise an identifier and/or address of the data storage 803 performing the job. For example, the indication may comprise a uniform resource identifier (URI) of the data storage 803. The indication may comprise the specific job identifier for the created job. This response signalling may be, for example, a "ProvMnS, notify" signalling.

At 8005, the data storage 803 signals data from the created job to the TrAPP 801. This signalling may comprise the specific job identifier. This signalling may identify each of the parameters being provided in addition to proving at least one associated value for each parameter. This signalling may be, for example, a "File.Streamreporting" signalling.

At 8006, the TrAPP 801 selects at least one of the provided parameters (and their associated values) for training the machine learning model. In other words, the vendor TrAPP 801 evaluates the received data and selects the data attributes from the extracted data that provide the desired information for training without requiring unnecessary data collection

At 8007, the TrAPP 801 signals the data storage 803. This signalling indicates which of the received parameters the TrAPP 801 has evaluated as being the most useful for training the machine learning model. In other words, this signalling indicates a subset of the parameters received in 8005, with the subset being a fraction (less than one) of the parameters received in 8005. The signalling of 8007 may request that the data storage collect and provide new data of only the further selected data parameters (including their values) for the specific job identifier. The request may include an indication of the amount of data points to be provided, where each datapoint is a tuple that holds values for each of the selected parameters. This signalling of 8007 may be, for example, a "ProvMnS,createMOI" signalling.

At 8008, the data storage 803 signals new data to the TrAPP 801. This new data comprises values for the selected parameters that were signalled at 8007. This data may not comprise values for parameters that were not indicated as being selected at 8007. This signalling may be, for example, a "File.Streamreporting" signalling.

At 8009, the TrAPP 801 selects a machine learning Model from its library and trains it to produce the new machine learning model instance for the vendor's prediction application using the data provided in 8008.

At 8010, assuming that the TrAPP 801 has received sufficient data for training the selected model, the TrAPP 801 signals, the data storage management function 802 to request that the job associated with the specific job identifier be stopped. After sufficient data received for the training. Where a license credential exists, this may be provided as part of the request of 8010. This signalling of 8010 may be, for example, a "ProvMnS,deleteMOI" signalling.

At 8011, the data storage management function 802 responds to the signalling of 8010 to indicate that the job has been stopped. This response may comprise the specific job identifier. This signalling of 8011 may be, for example, a "ProvMnS, response" signalling.

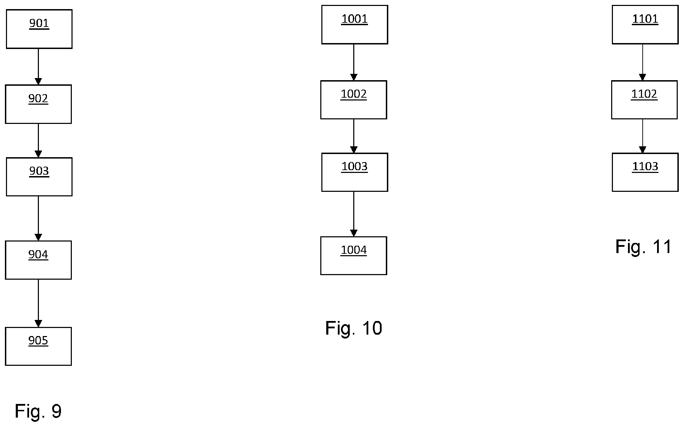

Figures 9 to 11 illustrate operations that may be performed by various apparatus described herein. The described apparatus may interact with each other as illustrated throughout the present disclosure.

Figure 9 illustrates potential operations that may be performed by an apparatus for training a machine learning model. The apparatus may comprise at least part of the functionality associated with a vendor's TrAPP, as discussed above.

At 901, the apparatus signals a request to a network operator's data management function for data for training a machine learning model to perform at least one function.

At 902, the apparatus receives, from data management storage of the network operator, data corresponding to parameters associated with the at least one function.

At 903, the apparatus selects a subset of the parameters for training the machine learning model.

At 904, the apparatus signals the selected subset of parameters to the data management storage.

At 905, the apparatus receives data corresponding to the selected subset from the data management storage.

The apparatus may determine that enough data corresponding to the selected subset has been received for training the machine learning model and, in response to the determination, signal the data management function to request that the data management store stop providing data corresponding to the selected subset. The apparatus may be configured to perform this determination at preconfigured intervals. The preconfigured intervals may be periodic, and/or performed in response to a trigger event, such as receipt of data.

The request for data for training a machine learning model may comprise at least one credential for validating the request. The credential may have been obtained during a previous authentication procedure.

The request for data for training a machine learning model may comprise at least one of: an identifier for a job associated with the requested data; an indication of the at least one function; and an amount of data to be delivered.

Figure 10 illustrates potential operations that may be performed by an apparatus for a data management storage for a network operator. The apparatus may interact with at least one of the apparatus of Figures 9 and 11.

At 1001, the apparatus receives, from a data management function of the network operator, a request to provide an entity for training a machine learning model with values associated with a plurality of parameters. The entity may be the apparatus of Figure 9, and/or a TrAPP of at least one of the above-described examples. The data management function may be as described below in relation to Figure 11, and/or as described herein in relation to the data management function.

At 1002, the apparatus signals values associated with the plurality of parameters to the entity.

At 1003, the apparatus receives, from the entity, an indication of a subset of the parameters.

At 1004, in response to receiving the indication, the apparatus signals values associated with the subset of the plurality of parameters to the entity.

The apparatus may signal values associated with the subset of the plurality of parameters to the entity in response to an instruction to stop from the data management function.

Figure 11 is a flow chart illustrating potential operations that may be performed by a data management function for a network operator. The apparatus of Figure 11 may interact with the apparatus of Figures 10 and 9.

At 1101, the apparatus receives a request, from an entity, for data for training a machine learning model to perform at least one function. The entity may be the apparatus of Figure 9, and/or a TrAPP of at least one of the above-described examples..

At 1102, the apparatus determines a plurality of parameters associated with performing the at least one function.

At 1103, the apparatus signals to a data management storage of the network operator a request to provide an entity for training a machine learning model with values associated with the plurality of parameters. The data management storage may be as described above in relation to Figure 10, and/or as described herein in relation to the data management storage.

The request for data for training a machine learning model may comprise at least one credential for validating the request, and the apparatus may be caused to validate the request using the at least one credential prior to signalling the data management storage.

The request for data for training a machine learning model may comprise at least one of: an identifier for a job associated with the requested data; an indication of the at least one function; and an amount of data to be delivered.

The apparatus may be caused to receive signalling from the entity that requests that the data management store stop providing data corresponding to a selected subset of the plurality of parameters; and in response to said received signalling, signal the data management store to stop providing data corresponding to a selected subset of the plurality of parameters to the entity.

The presently described techniques enable vendor-designed applications to select and access any relevant data within the operator's network (during runtime), without the need of any pre-knowledge on the operator's network and data. This, in turn, allows for the best/most suitable artificial intelligence/machine learning algorithm to be selected with regards to the relevant data and to train an artificial intelligence/machine learning model for the vendor-designed application using the operator's data. Moreover, the presently described techniques enable the optimal data-cost effectiveness for the operator when providing such data to vendors.

The presently described techniques allow for a fast downselection of relevant TRP/ TRP beams without exhaustive TRP transmit beam searching. Moreover, the present techniques are suitable for latency sensitive and/or low cost devices that do not have GDOP measurement capabilities.

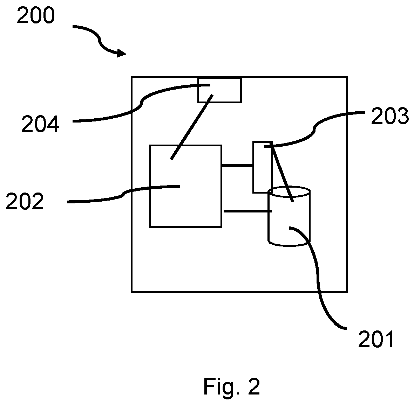

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR etc. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example the control apparatus 200 or processor 201 can be configured to execute an appropriate software code to provide the control functions.

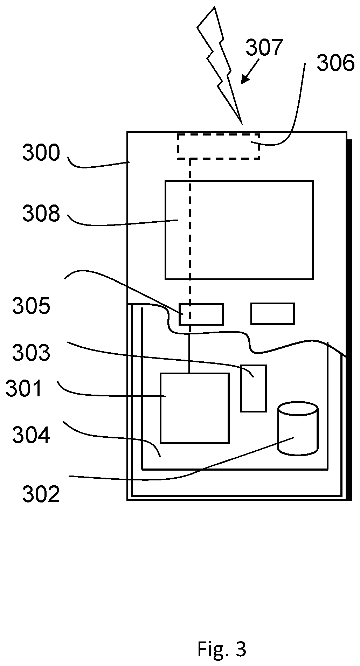

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the wireless device.

A wireless device is typically provided with at least one data processing entity 301, at least one memory 302 and other possible components 303 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 704. The user may control the operation of the wireless device by means of a suitable user interface such as key pad 305, voice commands, touch sensitive screen or pad, combinations thereof or the like. A display 308, a speaker and a microphone can be also provided. Furthermore, a wireless communication device may comprise appropriate connectors (either wired or wireless) to other devices and/or for connecting external accessories, for example hands-free equipment, thereto.

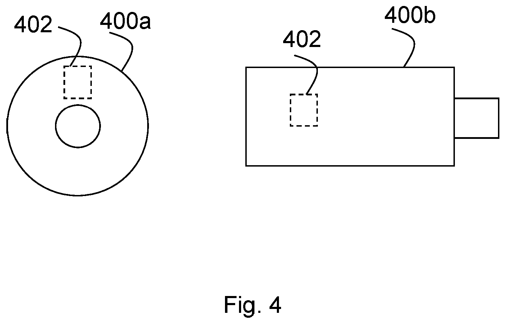

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 9 and/or Figure 10 and/or Figure 11.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 9 and/or Figure 10 and/or

Figure 11, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (AStudy ItemC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

In the above, different examples are described using, as an example of an access architecture to which the presently described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

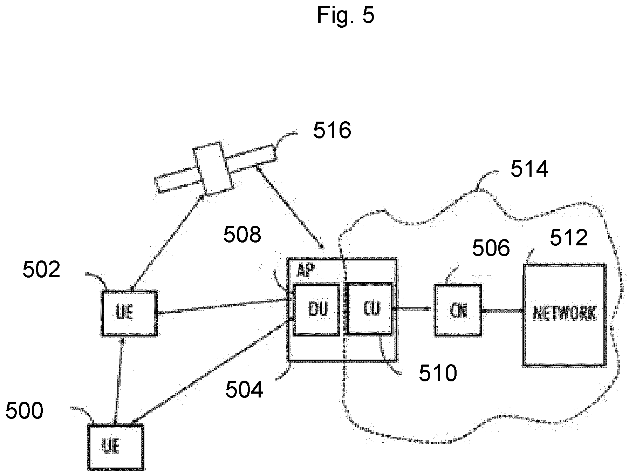

Figure 5 depicts examples of simplified system architectures only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

The examples are not, however, restricted to the system given as an example but a person skilled in the art may apply the solution to other communication systems provided with necessary properties.

The example of Figure 5 shows a part of an exemplifying radio access network. For example, the radio access network may support sidelink communications described below in more detail.

Figure 5 shows devices 500 and 502. The devices 500 and 502 are configured to be in a wireless connection on one or more communication channels with a node 504. The node 504 is further connected to a core network 506. In one example, the node 504 may be an access node such as (e/g)NodeB serving devices in a cell. In one example, the node 504 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 506 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Examples of a device are a subscriber unit, a user device, a user equipment (UE), a user terminal, a terminal device, a mobile station, a mobile device, etc

The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or, in some examples, a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 5) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control). 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 512, such as a public switched telephone network, or a VolP network, or the Internet, or a private network, or utilize services provided by them. The communication network may also be able to support the usage of cloud services, for example at least part of core network operations may be carried out as a cloud service (this is depicted in Figure 5 by "cloud" 514). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 508) and non-real time functions being carried out in a centralized manner (in a centralized unit, CU 510).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 5 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 5). A HNB Gateway (HNB-GW), which is typically installed within an operator's network may aggregate traffic from a large number of HNBs back to a core network.

## Claims

1. An apparatus for training a machine learning model, the apparatus comprising means for:
signalling (901) a request to a network operator's data storage management function for data for training a machine learning model to perform at least one function;
receiving (902), from a data storage of the network operator, data corresponding to parameters associated with the at least one function;
selecting (903) a subset of the parameters for training the machine learning model;
signalling (904) the selected subset of parameters to the data storage; and
receiving (905) data corresponding to the selected subset from the data storage.

2. An apparatus as claimed in any preceding claim, comprising means for:
determining that enough data corresponding to the selected subset has been received for training the machine learning model; and
in response to the determination, signalling the data storage management function to request that the data management store stop providing data corresponding to the selected subset.

3. An apparatus as claimed in any preceding claim, wherein the request for data for training a machine learning model comprises at least one credential for validating the request.

4. An apparatus as claimed in any preceding claim, wherein the request for data for training a machine learning model comprises at least one of: an identifier for a job associated with the requested data; an indication of the at least one function; and an amount of data to be delivered.

5. An apparatus for a data storage for a network operator, the apparatus comprising means for:
receiving (1001), from a data storage management function of the network operator, a request to provide an apparatus for training a machine learning model with values associated with a plurality of parameters;
signalling (1002) values associated with the plurality of parameters to the apparatus for training;
receiving (1003), from the apparatus for training, an indication of a subset of the parameters; and
in response to receiving the indication, signalling (1004) values associated with the subset of the plurality of parameters to the apparatus for training.

6. An apparatus as claimed in claim 5, comprising means for stopping signalling values associated with the subset of the plurality of parameters to the apparatus for training in response to an instruction to stop from the data storage management function.

7. An apparatus for a data storage management function for a network operator, the apparatus comprising means for:
receiving (1101) a request, from an apparatus for training a machine learning model, for data for training the machine learning model to perform at least one function;
determining (1102) a plurality of parameters associated with performing the at least one function; and
signalling (1103) to a data storage of the network operator a request to provide the apparatus for training with values associated with the plurality of parameters.

8. An apparatus as claimed in any claim 7, wherein the request for data for training a machine learning model comprises at least one credential for validating the request, and the apparatus comprises means for:
validating the request using the at least one credential prior to signalling the data storage.

9. An apparatus as claimed in any of claims 7 to 8, wherein the request for data for training a machine learning model comprises at least one of: an identifier for a job associated with the requested data; an indication of the at least one function; and an amount of data to be delivered.

10. An apparatus as claimed in any of claim 7 to 9, comprising means for:
receiving signalling from the apparatus for training that requests that the data management store stop providing data corresponding to a selected subset of the plurality of parameters; and
in response to said received signalling, signalling the data management store to stop providing data corresponding to a selected subset of the plurality of parameters to the apparatus for training.

11. A method for an apparatus for training a machine learning model, the method comprising:
signalling (901) a request to a network operator's data storage management function for data for training a machine learning model to perform at least one function;
receiving (902), from a data storage of the network operator, data corresponding to parameters associated with the at least one function;
selecting (903) a subset of the parameters for training the machine learning model;
signalling (904) the selected subset of parameters to the data storage; and
receiving (905) data corresponding to the selected subset from the data storage.

12. A method for an apparatus for a data storage for a network operator, the method comprising:
receiving (1001), from a data storage management function of the network operator, a request to provide an apparatus for training a machine learning model with values associated with a plurality of parameters;
signalling (1002) values associated with the plurality of parameters to the apparatus for training;
receiving (1003), from the apparatus for training, an indication of a subset of the parameters; and
in response to receiving the indication, signalling (1004) values associated with the subset of the plurality of parameters to the apparatus for training.

13. A method for an apparatus for a data storage management function for a network operator, the method comprising:
receiving (1101) a request, from an apparatus for training a machine learning model, for data for training the machine learning model to perform at least one function;
determining (1102) a plurality of parameters associated with performing the at least one function; and
signalling (1103) to a data storage of the network operator a request to provide the apparatus for training with values associated with the plurality of parameters.

14. A computer program product that, when run on an apparatus for a training a machine learning model, causes the apparatus to perform:
signalling (901)a request to a network operator's data storage management function for data for training a machine learning model to perform at least one function;
receiving (902), from a data storage of the network operator, data corresponding to parameters associated with the at least one function;
selecting (903) a subset of the parameters for training the machine learning model;
signalling (904) the selected subset of parameters to the data storage; and
receiving (905) data corresponding to the selected subset from the data storage.

15. A computer program product that, when run on an apparatus for a data storage for a network operator, causes the apparatus to perform:
receiving (1001), from a data storage management function of the network operator, a request to provide an apparatus for training a machine learning model with values associated with a plurality of parameters;
signalling (1002) values associated with the plurality of parameters to the apparatus for training;
receiving (1003), from the apparatus for training, an indication of a subset of the parameters; and
in response to receiving the indication, signalling (1004) values associated with the subset of the plurality of parameters to the apparatus for training.

16. A computer program product that, when run on an apparatus for a data storage management function for a network operator, causes the apparatus to perform:
receiving (1101) a request, from an apparatus for training a machine learning model, for data for training a machine learning model to perform at least one function;
determining (1102) a plurality of parameters associated with performing the at least one function; and
signalling (1103) to a data storage of the network operator a request to provide the apparatus for training with values associated with the plurality of parameters.

## Patentansprüche

1. Vorrichtung zum Trainieren eines Modells für maschinelles Lernen, wobei die Vorrichtung Mittel umfasst zum:
Signalisieren (901) einer Anforderung an eine Datenspeicherverwaltungsfunktion eines Netzbetreibers für Daten zum Trainieren eines Modells für maschinelles Lernen, um mindestens eine Funktion auszuführen;
Empfangen (902) von einem Datenspeicher des Netzbetreibers von Daten, die Parametern entsprechen, die der mindestens einen Funktion zugeordnet sind;
Auswählen (903) einer Teilmenge der Parameter zum Trainieren des Modells für maschinelles Lernen;
Signalisieren (904) der ausgewählten Teilmenge von Parametern an den Datenspeicher; und
Empfangen (905) von Daten, die der ausgewählten Teilmenge entsprechen, von dem Datenspeicher.

2. Vorrichtung nach einem der vorhergehenden Ansprüche, umfassend Mittel zum:
Bestimmen, dass genügend Daten, die der ausgewählten Teilmenge entsprechen, zum Trainieren des Modells für maschinelles Lernen empfangen worden sind; und in Reaktion auf die Bestimmung, Signalisieren an die Datenspeicherverwaltungsfunktion, den Datenverwaltungsspeicher aufzufordern, die Bereitstellung von Daten, die der ausgewählten Teilmenge entsprechen, einzustellen.

3. Vorrichtung nach einem der vorhergehenden Ansprüche, wobei die Anforderung für Daten zum Trainieren eines Modells für maschinelles Lernen mindestens einen Berechtigungsnachweis zum Validieren der Anforderung umfasst.

4. Vorrichtung nach einem der vorhergehenden Ansprüche, wobei die Anforderung für Daten zum Trainieren eines Modells für maschinelles Lernen mindestens eines umfasst von: einem Identifikator für einen Auftrag, der den angeforderten Daten zugeordnet ist; einer Angabe der mindestens einen Funktion; und einer zu liefernden Datenmenge.

5. Vorrichtung für einen Datenspeicher für einen Netzbetreiber, wobei die Vorrichtung Mittel umfasst zum:
Empfangen (1001) von einer Datenspeicherverwaltungsfunktion des Netzbetreibers einer Anforderung, einer Vorrichtung zum Trainieren eines Modells für maschinelles Lernen Werte bereitzustellen, die einer Mehrzahl von Parametern zugeordnet sind;
Signalisieren (1002) von Werten, die der Mehrzahl von Parametern zugeordnet sind, an die Vorrichtung zum Trainieren;
Empfangen (1003) von der Vorrichtung zum Trainieren einer Angabe einer Teilmenge der Parameter; und
in Reaktion auf den Empfang der Angabe, Signalisieren (1004) von Werten, die der Teilmenge der Mehrzahl von Parametern zugeordnet sind, an die Vorrichtung zum Trainieren.

6. Vorrichtung nach Anspruch 5, umfassend Mittel zum Beenden des Signalisierens von Werten, die der Teilmenge der Mehrzahl von Parametern zugeordnet sind, an die Vorrichtung zum Trainieren in Reaktion auf eine Anweisung zum Beenden von der Datenspeicherverwaltungsfunktion.

7. Vorrichtung für eine Datenspeicherverwaltungsfunktion für einen Netzbetreiber, wobei die Vorrichtung Mittel umfasst zum:
Empfangen (1101) einer Anforderung von einer Vorrichtung zum Trainieren eines Modells für maschinelles Lernen für Daten zum Trainieren des Modells für maschinelles Lernen, um mindestens eine Funktion auszuführen;
Bestimmen (1102) einer Mehrzahl von Parametern, die der Ausführung der mindestens einen Funktion zugeordnet sind; und
Signalisieren (1103) an einen Datenspeicher des Netzbetreibers einer Anforderung, der Vorrichtung zum Trainieren Werte bereitzustellen, die der Mehrzahl von Parametern zugeordnet sind.

8. Vorrichtung nach Anspruch 7, wobei die Anforderung für Daten zum Trainieren eines Modells für maschinelles Lernen mindestens einen Berechtigungsnachweis zum Validieren der Anforderung umfasst, und die Vorrichtung Mittel umfasst zum:
Validieren der Anforderung unter Verwendung des mindestens einen Berechtigungsnachweises vor dem Signalisieren an den Datenspeicher.

9. Vorrichtung nach einem der Ansprüche 7 bis 8, wobei die Anforderung für Daten zum Trainieren eines Modells für maschinelles Lernen mindestens eines umfasst von: einem Identifikator für einen Auftrag, der den angeforderten Daten zugeordnet ist; einer Angabe der mindestens einen Funktion; und einer zu liefernden Datenmenge.

10. Vorrichtung nach einem der Ansprüche 7 bis 9, umfassend Mittel zum:
Empfangen einer Signalisierung von der Vorrichtung zum Trainieren, die anfordert, dass der Datenverwaltungsspeicher die Bereitstellung von Daten, die einer ausgewählten Teilmenge der Mehrzahl von Parametern entsprechen, einstellt; und in Reaktion auf die empfangene Signalisierung, Signalisieren an den Datenverwaltungsspeicher, die Bereitstellung von Daten, die einer ausgewählten Teilmenge der Mehrzahl von Parametern entsprechen, an die Vorrichtung zum Trainieren einzustellen.

11. Verfahren für eine Vorrichtung zum Trainieren eines Modells für maschinelles Lernen, wobei das Verfahren umfasst:
Signalisieren (901) einer Anforderung an eine Datenspeicherverwaltungsfunktion eines Netzbetreibers für Daten zum Trainieren eines Modells für maschinelles Lernen, um mindestens eine Funktion auszuführen;
Empfangen (902) von einem Datenspeicher des Netzbetreibers von Daten, die Parametern entsprechen, die der mindestens einen Funktion zugeordnet sind;
Auswählen (903) einer Teilmenge der Parameter zum Trainieren des Modells für maschinelles Lernen;
Signalisieren (904) der ausgewählten Teilmenge von Parametern an den Datenspeicher; und
Empfangen (905) von Daten, die der ausgewählten Teilmenge entsprechen, von dem Datenspeicher.

12. Verfahren für eine Vorrichtung für einen Datenspeicher für einen Netzbetreiber, wobei das Verfahren umfasst:
Empfangen (1001) von einer Datenspeicherverwaltungsfunktion des Netzbetreibers einer Anforderung, einer Vorrichtung zum Trainieren eines Modells für maschinelles Lernen Werte bereitzustellen, die einer Mehrzahl von Parametern zugeordnet sind;
Signalisieren (1002) von Werten, die der Mehrzahl von Parametern zugeordnet sind, an die Vorrichtung zum Trainieren;
Empfangen (1003) von der Vorrichtung zum Trainieren einer Angabe einer Teilmenge der Parameter; und
in Reaktion auf den Empfang der Angabe, Signalisieren (1004) von Werten, die der Teilmenge der Mehrzahl von Parametern zugeordnet sind, an die Vorrichtung zum Trainieren.

13. Verfahren für eine Vorrichtung für eine Datenspeicherverwaltungsfunktion für einen Netzbetreiber, wobei das Verfahren umfasst:
Empfangen (1101) einer Anforderung von einer Vorrichtung zum Trainieren eines Modells für maschinelles Lernen für Daten zum Trainieren des Modells für maschinelles Lernen, um mindestens eine Funktion auszuführen;
Bestimmen (1102) einer Mehrzahl von Parametern, die der Ausführung der mindestens einen Funktion zugeordnet sind; und
Signalisieren (1103) an einen Datenspeicher des Netzbetreibers einer Anforderung, der Vorrichtung zum Trainieren Werte bereitzustellen, die der Mehrzahl von Parametern zugeordnet sind.

14. Computerprogrammprodukt, das, wenn es auf einer Vorrichtung zum Trainieren eines Modells für maschinelles Lernen ausgeführt wird, die Vorrichtung veranlasst, Folgendes auszuführen:
Signalisieren (901) einer Anforderung an eine Datenspeicherverwaltungsfunktion eines Netzbetreibers für Daten zum Trainieren eines Modells für maschinelles Lernen, um mindestens eine Funktion auszuführen;
Empfangen (902) von einem Datenspeicher des Netzbetreibers von Daten, die Parametern entsprechen, die der mindestens einen Funktion zugeordnet sind;
Auswählen (903) einer Teilmenge der Parameter zum Trainieren des Modells für maschinelles Lernen;
Signalisieren (904) der ausgewählten Teilmenge von Parametern an den Datenspeicher; und
Empfangen (905) von Daten, die der ausgewählten Teilmenge entsprechen, von dem Datenspeicher.

15. Computerprogrammprodukt, das, wenn es auf einer Vorrichtung für einen Datenspeicher für einen Netzbetreiber ausgeführt wird, die Vorrichtung veranlasst, Folgendes auszuführen:
Empfangen (1001) von einer Datenspeicherverwaltungsfunktion des Netzbetreibers einer Anforderung, einer Vorrichtung zum Trainieren eines Modells für maschinelles Lernen Werte bereitzustellen, die einer Mehrzahl von Parametern zugeordnet sind;
Signalisieren (1002) von Werten, die der Mehrzahl von Parametern zugeordnet sind, an die Vorrichtung zum Trainieren;
Empfangen (1003) von der Vorrichtung zum Trainieren einer Angabe einer Teilmenge der Parameter; und
in Reaktion auf den Empfang der Angabe, Signalisieren (1004) von Werten, die der Teilmenge der Mehrzahl von Parametern zugeordnet sind, an die Vorrichtung zum Trainieren.

16. Computerprogrammprodukt, das, wenn es auf einer Vorrichtung für eine Datenspeicherverwaltungsfunktion für einen Netzbetreiber ausgeführt wird, die Vorrichtung veranlasst, Folgendes auszuführen:
Empfangen (1101) einer Anforderung von einer Vorrichtung zum Trainieren eines Modells für maschinelles Lernen für Daten zum Trainieren des Modells für maschinelles Lernen, um mindestens eine Funktion auszuführen;
Bestimmen (1102) einer Mehrzahl von Parametern, die der Ausführung der mindestens einen Funktion zugeordnet sind; und
Signalisieren (1103) an einen Datenspeicher des Netzbetreibers einer Anforderung, der Vorrichtung zum Trainieren Werte bereitzustellen, die der Mehrzahl von Parametern zugeordnet sind.

## Revendications

1. Appareil pour entraîner un modèle d'apprentissage automatique, l'appareil comprenant des moyens pour :
signaler (901) une requête à une fonction de gestion de stockage de données d'un opérateur de réseau pour des données pour entraîner un modèle d'apprentissage automatique afin d'exécuter au moins une fonction ;
recevoir (902), d'un stockage de données de l'opérateur de réseau, des données correspondant à des paramètres associés à ladite au moins une fonction ;
sélectionner (903) un sous-ensemble des paramètres pour entraîner le modèle d'apprentissage automatique ;
signaler (904) le sous-ensemble sélectionné de paramètres au stockage de données ; et
recevoir (905) des données correspondant au sous-ensemble sélectionné en provenance du stockage de données.

2. Appareil selon l'une quelconque des revendications précédentes, comprenant des moyens pour :
déterminer que suffisamment de données correspondant au sous-ensemble sélectionné ont été reçues pour entraîner le modèle d'apprentissage automatique ; et
en réponse à la détermination, signaler à la fonction de gestion de stockage de données de demander au magasin de gestion de données de cesser de fournir des données correspondant au sous-ensemble sélectionné.

3. Appareil selon l'une quelconque des revendications précédentes, dans lequel la requête pour des données pour entraîner un modèle d'apprentissage automatique comprend au moins un justificatif d'identité pour valider la requête.

4. Appareil selon l'une quelconque des revendications précédentes, dans lequel la requête pour des données pour entraîner un modèle d'apprentissage automatique comprend au moins l'un parmi : un identifiant pour un travail associé aux données demandées ; une indication de ladite au moins une fonction ; et une quantité de données à livrer.

5. Appareil pour un stockage de données pour un opérateur de réseau, l'appareil comprenant des moyens pour :
recevoir (1001), d'une fonction de gestion de stockage de données de l'opérateur de réseau, une requête pour fournir à un appareil pour entraîner un modèle d'apprentissage automatique des valeurs associées à une pluralité de paramètres ;
signaler (1002) des valeurs associées à la pluralité de paramètres à l'appareil pour l'entraînement ;
recevoir (1003), de l'appareil pour l'entraînement, une indication d'un sous-ensemble des paramètres ; et
en réponse à la réception de l'indication, signaler (1004) des valeurs associées au sous-ensemble de la pluralité de paramètres à l'appareil pour l'entraînement.

6. Appareil selon la revendication 5, comprenant des moyens pour cesser de signaler des valeurs associées au sous-ensemble de la pluralité de paramètres à l'appareil pour l'entraînement en réponse à une instruction de cesser en provenance de la fonction de gestion de stockage de données.

7. Appareil pour une fonction de gestion de stockage de données pour un opérateur de réseau, l'appareil comprenant des moyens pour :
recevoir (1101) une requête, d'un appareil pour entraîner un modèle d'apprentissage automatique, pour des données pour entraîner le modèle d'apprentissage automatique afin d'exécuter au moins une fonction ;
déterminer (1102) une pluralité de paramètres associés à l'exécution de ladite au moins une fonction ; et
signaler (1103) à un stockage de données de l'opérateur de réseau une requête pour fournir à l'appareil pour l'entraînement des valeurs associées à la pluralité de paramètres.

8. Appareil selon la revendication 7, dans lequel la requête pour des données pour entraîner un modèle d'apprentissage automatique comprend au moins un justificatif d'identité pour valider la requête, et l'appareil comprend des moyens pour :
valider la requête en utilisant ledit au moins un justificatif d'identité avant de signaler au stockage de données.

9. Appareil selon l'une quelconque des revendications 7 à 8, dans lequel la requête pour des données pour entraîner un modèle d'apprentissage automatique comprend au moins l'un parmi : un identifiant pour un travail associé aux données demandées ; une indication de ladite au moins une fonction ; et une quantité de données à livrer.

10. Appareil selon l'une quelconque des revendications 7 à 9, comprenant des moyens pour :
recevoir de l'appareil pour l'entraînement une signalisation demandant que le magasin de gestion de données cesse de fournir des données correspondant à un sous-ensemble sélectionné de la pluralité de paramètres ; et
en réponse à ladite signalisation reçue, signaler au magasin de gestion de données de cesser de fournir des données correspondant à un sous-ensemble sélectionné de la pluralité de paramètres à l'appareil pour l'entraînement.

11. Procédé pour un appareil pour entraîner un modèle d'apprentissage automatique, le procédé comprenant :
signaler (901) une requête à une fonction de gestion de stockage de données d'un opérateur de réseau pour des données pour entraîner un modèle d'apprentissage automatique afin d'exécuter au moins une fonction ;
recevoir (902), d'un stockage de données de l'opérateur de réseau, des données correspondant à des paramètres associés à ladite au moins une fonction ;
sélectionner (903) un sous-ensemble des paramètres pour entraîner le modèle d'apprentissage automatique ;
signaler (904) le sous-ensemble sélectionné de paramètres au stockage de données ; et
recevoir (905) des données correspondant au sous-ensemble sélectionné en provenance du stockage de données.

12. Procédé pour un appareil pour un stockage de données pour un opérateur de réseau, le procédé comprenant:
recevoir (1001), d'une fonction de gestion de stockage de données de l'opérateur de réseau, une requête pour fournir à un appareil pour entraîner un modèle d'apprentissage automatique des valeurs associées à une pluralité de paramètres ;
signaler (1002) des valeurs associées à la pluralité de paramètres à l'appareil pour l'entraînement ;
recevoir (1003), de l'appareil pour l'entraînement, une indication d'un sous-ensemble des paramètres ; et
en réponse à la réception de l'indication, signaler (1004) des valeurs associées au sous-ensemble de la pluralité de paramètres à l'appareil pour l'entraînement.

13. Procédé pour un appareil pour une fonction de gestion de stockage de données pour un opérateur de réseau, le procédé comprenant :
recevoir (1101) une requête, d'un appareil pour entraîner un modèle d'apprentissage automatique, pour des données pour entraîner le modèle d'apprentissage automatique afin d'exécuter au moins une fonction ;
déterminer (1102) une pluralité de paramètres associés à l'exécution de ladite au moins une fonction ; et
signaler (1103) à un stockage de données de l'opérateur de réseau une requête pour fournir à l'appareil pour l'entraînement des valeurs associées à la pluralité de paramètres.

14. Produit-programme d'ordinateur qui, lorsqu'il est exécuté sur un appareil pour entraîner un modèle d'apprentissage automatique, amène l'appareil à exécuter :
signaler (901) une requête à une fonction de gestion de stockage de données d'un opérateur de réseau pour des données pour entraîner un modèle d'apprentissage automatique afin d'exécuter au moins une fonction ;
recevoir (902), d'un stockage de données de l'opérateur de réseau, des données correspondant à des paramètres associés à ladite au moins une fonction ;
sélectionner (903) un sous-ensemble des paramètres pour entraîner le modèle d'apprentissage automatique ;
signaler (904) le sous-ensemble sélectionné de paramètres au stockage de données ; et
recevoir (905) des données correspondant au sous-ensemble sélectionné en provenance du stockage de données.

15. Produit-programme d'ordinateur qui, lorsqu'il est exécuté sur un appareil pour un stockage de données pour un opérateur de réseau, amène l'appareil à exécuter :
recevoir (1001), d'une fonction de gestion de stockage de données de l'opérateur de réseau, une requête pour fournir à un appareil pour entraîner un modèle d'apprentissage automatique des valeurs associées à une pluralité de paramètres ;
signaler (1002) des valeurs associées à la pluralité de paramètres à l'appareil pour l'entraînement ;
recevoir (1003), de l'appareil pour l'entraînement, une indication d'un sous-ensemble des paramètres ; et
en réponse à la réception de l'indication, signaler (1004) des valeurs associées au sous-ensemble de la pluralité de paramètres à l'appareil pour l'entraînement.

16. Produit-programme d'ordinateur qui, lorsqu'il est exécuté sur un appareil pour une fonction de gestion de stockage de données pour un opérateur de réseau, amène l'appareil à exécuter :
recevoir (1101) une requête, d'un appareil pour entraîner un modèle d'apprentissage automatique, pour des données pour entraîner le modèle d'apprentissage automatique afin d'exécuter au moins une fonction ;
déterminer (1102) une pluralité de paramètres associés à l'exécution de ladite au moins une fonction ; et
signaler (1103) à un stockage de données de l'opérateur de réseau une requête pour fournir à l'appareil pour l'entraînement des valeurs associées à la pluralité de paramètres.
